# EUROPEAN PATENT SPECIFICATION

(11) **EP 4 146 375 B1**
(45) Date of publication and mention of the grant of the patent: **06.09.2023**
(21) Application number: 21721381.8
(22) Date of filing: 05.05.2021
(51) Int. Cl.: B01D 53/50, B01D 53/18

(54) **WET INLINE SCRUBBER WITH A SIDE INLET FOR REDUCING THE AMOUNT OF SOX IN AN EXHAUST GAS PRODUCED BY ONE OR MORE ENGINES OF A MARINE VESSEL**
INLINE-NASSWÄSCHER MIT EINEM SEITENEINLASS ZUM REDUZIEREN DER SOX-MENGE IN EINEM ABGAS, DAS VON EINEM ODER MEHREREN MOTOREN EINES SCHIFFS ERZEUGT WIRD
ÉPURATEUR PAR VOIE HUMIDE COMPORTANT UNE ENTRÉE LATÉRALE POUR RÉDUIRE LA QUANTITÉ DE SOX DANS UN GAZ D'ÉCHAPPEMENT PRODUIT PAR UNE OU PLUSIEURS MOTEURS D'UN NAVIRE

(30) Priority: 05.05.2020 EP 20172997
(43) Date of publication of application: 15.03.2023
(73) Proprietor: Yara Marine Technologies AS, 0277 Oslo (NO)
(72) Inventor: BAHADUR THAPA, Shyam, 0655 Oslo (NO); JOURAK, Amir, 2074 Eidsvoll Verk (NO); POHJANEN, Pekka Juhana, 0268 Oslo (NO)
(74) Representative: De Clercq & Partners
(86) International application number: PCT/EP2021/061780
(87) International publication number: WO 2021/224294

(56) References cited:
- EP-A1- 3 437 718
- US-A1- 2016 016 109
- US-A1- 2019 107 021

## Description

### TECHNICAL FIELD

The present disclosure relates to the field of cleaning of exhaust gas produced by one or more engines of a marine vessel. More in particular, the disclosure relates to reducing the content of sulphur oxides (SOₓ) in the exhaust gas produced by one or more engines of a marine vessel using a wet inline scrubber with a side inlet.

### BACKGROUND

It is already known to apply wet inline marine scrubbers using an alkali scrubber liquid (solution) such as seawater which is whether or not supplemented with alkali, or fresh water to which alkali is added, to reduce the amount of SOx in the exhaust gas of marine vessels in order to meet the maritime emission (MARPOL) regulations of the International Marine Organization (IMO).

Wet inline scrubbers with an I-shaped design have a vertically extending exhaust gas reaction tube having an inlet for marine exhaust gas at the bottom thereof. In inline scrubbers, the exhaust gas pipe is connected directly to the scrubber. This type of scrubbers has the disadvantage that they are considerably long and a sufficient long chimney is necessary to install this type of scrubbers. Especially older ships with a chimney having a restricted length are more difficult to retrofit with such scrubbers.

In US 2019/107021, for instance, a spray tower arranged to be vertically positioned is disclosed, wherein the spray tower comprises a central exhaust pipe arranged for introducing exhaust gas into an inner space of the spray tower through an exhaust gas inlet positioned at a proximal end of a central exhaust gas pipe. This central exhaust gas pipe is positioned at a bottom end of the spray tower in the installed position. This central exhaust gas pipe is in fluid connection with the inner space of the spray tower through an exhaust gas inlet arranged at a top end of the central exhaust gas pipe and at least one exhaust gas outlet arranged for withdrawing purified exhaust gas from the inner space of the spray tower. This exhaust gas outlet is positioned at a top end of the spray tower in the installed position and is in fluid connection with the inner space of the spray tower. A general exhaust gas flow is passing through the inner space of the spray tower from the exhaust gas inlet to the exhaust gas outlet. One or more spray devices are configured to provide a stream of scrubber liquid within the inner space of the spray tower counter current to the general exhaust gas flow. At least two engine exhaust gas pipes are in fluid connection with the distal end of the central gas pipe.

In US 2016/016109, a vertical scrubber for exhaust gas from a marine vessel is described. An exhaust gas tube is substantially coaxially arranged through the bottom of a lower scrubbing chamber and is released through an exhaust gas outlet being coaxially arranged through the top of an upper scrubbing chamber. A lower scrubbing chamber deflection body is arranged above the opening of the exhaust gas tube for redirecting the exhaust gas towards the walls of the scrubber and create turbulent gas flow, where one or more lower chamber water injector(s) is (are) arranged above the lower scrubbing chamber deflection body, to introduce scrubbing water, and where a lower chamber exhaust gas outlet is arranged at the top of the lower scrubbing chamber as a coaxial constriction, for withdrawing the partly scrubbed exhaust gas from the first scrubbing chamber and introducing the gas into the upper scrubbing chamber.

In EP 3 437 718, a scrubber for cleaning of a gas is disclosed, the casing enclosing a scrubbing chamber and comprising a gas inlet into and a gas outlet out from the scrubbing chamber. The casing permits the gas to flow through the scrubbing chamber from the gas inlet to the gas outlet. A deflector device is provided in the scrubbing chamber between the gas inlet and the gas outlet and forms a passage between the deflector device and the casing. The deflector device comprises a downstream surface facing the gas outlet and having an outer edge. A spraying nozzle is configured to spray a scrubbing liquid into the scrubbing chamber and the gas flow. A conveying member extends from the deflector device. The conveying member leads scrubbing liquid collected by the deflector device from the deflector device.

In order to reduce the height of the marine scrubber, wet marine inline scrubbers with a side inlet (entry) for the marine exhaust gas have been developed. The present disclosure relates to this type of marine scrubbers.

Some ships however require a further reduction of the height of the scrubber.

It is consequently an aim of the present disclosure to provide a wet inline marine scrubber with a side inlet for reducing the amount of SOx in a marine exhaust gas having a reduced height.

### Summary

According to a first aspect of the present disclosure, a wet inline scrubber using alkali scrubber fluid for reducing the amount of SOx in an exhaust gas produced by one or more engines of a marine vessel, comprising a vertically extending exhaust gas reaction tube, which comprises
- a lower scrubbing chamber comprising
   ∘ a side inlet for the exhaust gas produced by the one or more engines of the marine vessel,
   ∘ a plurality of scrubber fluid injectors to inject alkali scrubber fluid in the exhaust gas present in the lower scrubbing chamber to partially scrub this exhaust gas, resulting in a first used scrubber liquid,
   ∘ a used scrubber fluid drain at the bottom thereof,
- an upper scrubbing chamber comprising
   ∘ an exhaust gas outlet at the top thereof,
   ∘ a plurality of scrubber fluid injectors to inject alkali scrubber fluid in the exhaust gas to further scrub exhaust gas which has already partially been scrubbed in the lower scrubbing chamber, resulting in a second used scrubber liquid,
   wherein the lower scrubbing chamber and the upper scrubbing chamber are fluidically connected through a lower chamber exhaust gas outlet guiding the partially scrubbed exhaust gas flowing from the lower scrubbing chamber to the upper scrubbing chamber, said lower chamber exhaust gas outlet comprising a reverse funnel extending from walls of the exhaust gas reaction tube upwards and towards a central opening, characterized in that along the circumferential border where the reverse funnel is attached to the exhaust gas reaction tube, one or more slit-shaped openings are provided that allow scrubber fluid to flow from the upper scrubbing chamber to the lower scrubbing chamber and allow the second used scrubber fluid to flow over the side inlet for the exhaust gas present in the lower scrubbing chamber.

Providing one or more slit-shaped openings along the circumferential border where the reverse funnel is attached to the exhaust gas reaction tube, with at least one slit-shaped opening arranged at the side of the reaction tube where the exhaust gas side inlet is arranged, first of all has the advantage that the height (length) of the known wet inline scrubbers can be reduced by approximately 22 - 28%. The reason thereof is that first of all, the side inlet is already used to cool the incoming exhaust gas from the one or more engines, and secondly, the lower scrubber chamber is already used for scrubbing, whereas in a normal I-type scrubber, a certain height is already required to collect the scrubber fluid and to distribute the exhaust gas within the scrubber.

Furthermore, since the used alkali scrubber fluid in the upper scrubbing chamber still has unused alkalinity left since 65 - 75% of the scrubbing is performed in the lower scrubbing chamber, and this water flows down from the upper scrubbing chamber to the lower scrubbing chamber, consumption of alkali scrubber fluid is reduced.

Also, the number of internals is reduced reducing cost and manufacturing time, i.e. the alkali scrubber fluid that flows from the upper scrubbing chamber to the lower scrubbing chamber takes over the function of a guide vane which is normally provided to change the direction of the exhaust gas within the exhaust gas reaction tube and/or to arrange for the distribution of the exhaust gas within the exhaust gas reaction tube. This guide vane is consequently not necessary.

Also, no additional means are necessary in the lower scrubbing chamber to redirect the exhaust gases towards the walls of the exhaust gas reaction tube to create a turbulent gas flow to result in an intimate mixing of the exhaust gas with the scrubber liquid which is injected into the lower scrubbing chamber which reduces the temperature of the exhaust gas and allows an efficient dissolving of SOx in the scrubber liquid. The one or more slit-shaped openings that are arranged in the lower chamber exhaust gas outlet take care of this effect.

Furthermore, since the exhaust gas enters the lower scrubbing chamber via a side inlet, there is no need for the normally present water trap in the scrubber exhaust gas inlet that prevents scrubber water from entering the marine vessel engine.

Furthermore, the exhaust gas is evenly distributed at the side inlet because of an obstruction which is created for the exhaust gas passing through the side inlet caused by the layer of scrubber fluid which flows from the upper scrubbing chamber to the lower scrubbing chamber over the side inlet. This also leads to a reduced velocity of the incoming exhaust gas. Also, since the exhaust gas passes through the water layer that flows down over the side inlet, the temperature of the exhaust gas is cooled down leading to a better scrubbing of the exhaust gas.

According to one embodiment of a system according to the disclosure, the one or more slit-shaped openings cover between 40% and 60% of the circumferential border where the reverse funnel is attached to the exhaust gas reaction tube.

More in particular, the one or more slit-shaped openings cover 50% of the circumferential border where the reverse funnel is attached to the exhaust gas reaction tube.

In an embodiment of a scrubber according to the present disclosure, the lower chamber exhaust gas outlet comprises two slit-shaped openings.

More in particular, the lower chamber exhaust gas outlet comprises a first slit-shaped opening arranged at the side of the reaction tube where the exhaust gas side inlet is arranged, and a second slit-shaped opening arranged at the opposite side thereof. This first slit-shaped opening allows that used scrubber fluid flows over the inlet side for the exhaust gas present in the lower scrubbing chamber.

In an embodiment of a scrubber according to the present disclosure, the scrubber comprises a side tube which is connected to the lower scrubber chamber via the alkali scrubber fluid inlet, wherein this side tube is arranged with one or more alkali scrubber fluid injectors to inject scrubber fluid in the exhaust gas coming from the one or more engines of the marine vessel.

The alkali scrubber fluid injected by the injectors helps to cool down the exhaust gas which reduces the temperature and consequently reduces the velocity thereof. A reduced velocity of the exhaust gas helps in obtaining a better distribution of the exhaust gas that enters into the lower scrubbing chamber.

In an embodiment of a scrubber according to the present disclosure, the upper scrubbing chamber comprises a deflection body which is arranged above the central opening of the lower chamber exhaust gas outlet.

The deflection body helps to optimise the function of the scrubbing fluid as well as to converge / mix the exhaust gas such that the unscrubbed exhaust gas cannot leave the scrubber without being scrubbed to remove the SOx.

In an embodiment, the deflection body comprises two oppositely directed straight cones having a common base and a common axis of rotation coinciding with the length axis of the exhaust gas reaction tube of the scrubber.

In a specific embodiment of a scrubber according to the present disclosure, the one or more scrubber fluid injectors of the upper scrubbing chamber are arranged above the deflection body.

The alkali scrubber fluid that is introduced by the one or more water injectors both wash and cool the incoming exhaust gas.

In an embodiment of a scrubber according to the present disclosure, the lower scrubbing chamber comprises a single scrubber water drain arranged at the bottom thereof. In that way, drain piping is saved simplifying the scrubber system.

In a particular embodiment of a scrubber according to the present disclosure, the exhaust gas reaction tube has a circular diameter, and the lower chamber exhaust gas outlet has an annular (ring) shape.

In an embodiment of a scrubber according to the present disclosure, the height of the scrubber is between 8 m and 18 m, depending upon the size of the one or more engines of the marine vessel.

According to a second aspect of the present disclosure, a method is disclosed for scrubbing of exhaust gas produced by one or more engines of a marine vessel, wherein the exhaust gas is introduced into a wet inline scrubber where the exhaust gas is scrubbed in contact with alkali scrubber fluid for reduction of SOx in the exhaust gas, the method comprising the steps of:
- introducing the exhaust gas from the one or more engines of the marine vessel via a side inlet in a lower scrubbing chamber of a vertically extending exhaust gas reaction tube;
- injecting alkali scrubber fluid in the exhaust gas present in the lower scrubbing chamber, thereby partially scrubbing the exhaust gas and obtaining a first used scrubber liquid;
- withdrawing the partially scrubbed exhaust gas from the lower scrubbing chamber and letting it flow into an upper scrubbing chamber by passing it through a reverse funnel extending from walls of the exhaust gas reaction tube upwards and towards a central opening;
- injecting alkali scrubber fluid in the partially scrubbed exhaust gas present in the upper scrubbing chamber, thereby further scrubbing the partially scrubbed exhaust gas and obtaining a second used scrubber liquid;
- withdrawing the scrubbed exhaust gas from the upper scrubbing chamber via an exhaust gas outlet arranged at the top of the upper scrubbing chamber;
- flowing of the second used scrubber fluid from the upper scrubbing chamber through one or more slit-shaped openings arranged along the circumferential border where the reverse funnel is attached to the exhaust gas reaction tube;
- flowing of the second used scrubber fluid over the exhaust gas side inlet present in the lower scrubbing chamber;
- withdrawing the used scrubber fluid from the lower scrubbing chamber via a used scrubber fluid drain at the bottom of the lower scrubbing chamber.

In a possible method according to the present disclosure, the method further comprises the step of injecting alkali scrubber fluid in the exhaust gas from the one or more engines of the marine vessel which is flowing in a side tube which is connected to the lower scrubbing chamber via the side inlet.

In a specific method according to the present disclosure, the method comprises the step of injecting scrubber fluid in the upper scrubbing chamber above a deflection body.

In a particular method according to the present disclosure, the method comprises the step of withdrawing the used scrubber fluid via a single used scrubber fluid drain at the bottom of the lower scrubbing chamber.

In a method according to the present disclosure, a wet inline scrubber is used which comprises:
- a lower scrubbing chamber comprising
   ∘ a side inlet for the exhaust gas produced by the one or more engines of the marine vessel,
   ∘ a plurality of scrubber fluid injectors to inject alkali scrubber fluid in the exhaust gas present in the lower scrubbing chamber to partially scrub this exhaust gas, resulting in a first used scrubber liquid,
      ∘ a used scrubber fluid drain at the bottom thereof,
- an upper scrubbing chamber comprising
   ∘ an exhaust gas outlet at the top thereof,
   ∘ a plurality of scrubber fluid injectors to inject alkali scrubber fluid in the exhaust gas to further scrub exhaust gas which has already partially been scrubbed in the lower scrubbing chamber, resulting in a second used scrubber fluid,
   wherein the lower scrubbing chamber and the upper scrubbing chamber are fluidically connected through a lower chamber exhaust gas outlet guiding the partially scrubbed exhaust gas flowing from the lower scrubbing chamber to the upper scrubbing chamber, said lower chamber exhaust gas outlet comprising a reverse funnel extending from walls of the exhaust gas reaction tube upwards and towards a central opening, characterized in that along the circumferential border where the reverse funnel is attached to the exhaust gas reaction tube, one or more slit-shaped openings are provided that allow the second used scrubber fluid to flow from the upper scrubbing chamber to the lower scrubbing chamber and that allow the second used scrubber fluid to flow over the inlet side for the exhaust gas present in the lower scrubbing chamber.

More in particular, a scrubber according to the present disclosure as described above is used.

### Description of the figures

FIG. 1 shows a length section through a scrubber according to the present disclosure.
FIG. 2 shows a cross section of the scrubber according to line AA as shown in FIG. 1.
FIG. 3 shows a detail of the lower chamber exhaust gas outlet of a scrubber according to the present disclosure.

### Detailed description

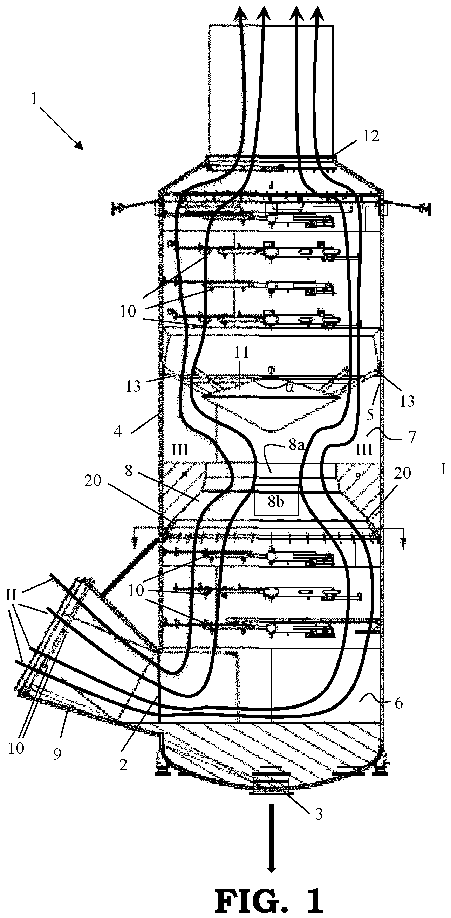

As can be seen in figure 1, a wet inline scrubber (1) with a side inlet (2) for exhaust gas produced by one or more engines of a marine vessel (not shown in figure 1) comprises a vertically extending exhaust gas reaction tube (4) which is provided with an inner wall (5). In figure 1, lines II show an example of how the exhaust gas moves through the inside of the scrubber (1). The exhaust gas reaction tube (4) is more in particular a tubular element having a substantial circular cross section. However, other shapes of cross sections are also possible. The height of the scrubber (1) is more in particular between 8 m and 18 m, depending upon the size of the one or more engines of the marine vessel.

The reaction tube (4) is subdivided in a lower scrubbing chamber (6) and an upper scrubbing chamber (7). The lower and an upper scrubbing chamber (6, 7) are substantially symmetric about a common length axis being substantially vertically arranged.

The lower scrubbing chamber (6) is more in particular connected with a side tube (9) via the side inlet (2). As can be seen in figure 1, the exhaust gas produced by the one or more engines of the marine vessel is entering via this side tube (9) through the side inlet (2) into the lower scrubbing chamber (6).

As can be seen in figure 1, the side tube (9) is arranged with one or more alkali scrubber fluid injectors (10) which are arranged to inject scrubber fluid in the exhaust gas coming from the one or more engines of the marine vessel. This results in used scrubber fluid, in particular a third used scrubber fluid.

Also the lower scrubbing chamber (6) is provided with a plurality of injectors (10) for injecting alkali scrubber fluid into the exhaust gas present in the lower scrubbing chamber (6). This also results in used scrubber liquid, in particular in a first used scrubber fluid. Likewise, the upper scrubbing chamber (7) is provided with a plurality of injectors (10) for injecting alkali scrubber fluid into the exhaust gas present in the upper scrubbing chamber (7). This likewise results in used scrubber fluid, in particular in a second used scrubber fluid. The alkali scrubber fluid can be seawater, whether or not supplemented with alkali, as well as fresh water which is supplemented with alkali. The scrubber fluid is delivered to the injectors (10) via the outside of the exhaust gas reaction tube (4), as indicated with lines I in figure 1. The injectors (10) are more in particular in the form of sprayers which disperse the scrubber fluid into the exhaust gas which is flowing from the bottom to the top of the exhaust gas reaction tube (4) in fine droplets. The exhaust gas (3) entering the lower scrubbing chamber (6) is partially scrubbed in the lower scrubbing chamber (6). 65 - 75% of the scrubbing is performed in the lower scrubbing chamber. The further scrubbing is performed in the upper scrubbing chamber (7).

The lower scrubbing chamber (6) is at the bottom thereof arranged with a used scrubber fluid drain (3). More in particular, a single drain (3) for used scrubber fluid is provided, meaning that there is only one such drain (3) present. In particular, the drain for used scrubber fluid removes the first, second and third used scrubber fluid, with the first used scrubber fluid generated in the lower scrubbing chamber, the second used scrubber fluid generated in the upper scrubbing chamber and flowing down from the upper scrubbing chamber into the lower scrubbing chamber as further discussed below, and the third used scrubber liquid generated in the side tube (9) and flowing into the lower scrubbing chamber via side tube (9) and side inlet (2). The upper scrubbing chamber (7) is arranged with an exhaust gas outlet (12) at the top thereof. This scrubbed gas leaves the upper scrubbing chamber (7) through the exhaust gas outlet (12) from which it is released into the atmosphere directly or via a not shown cleaned exhaust gas outlet pipe. The exhaust gas outlet (12) more in particular is formed as a substantially axial narrowing of the upper scrubbing chamber (7).

The lower scrubbing chamber (6) is at the top thereof provided with a lower chamber exhaust gas outlet (8) which confines the lower scrubbing chamber (6). This lower chamber exhaust gas outlet (8) has a central opening (8a) through which partially scrubbed exhaust gas flows which is coming from the lower scrubbing chamber (6) during operation of the scrubber (1) and which flows up to the upper scrubbing chamber (7). The lower chamber exhaust gas outlet (8) is a coaxial constriction formed substantially as an axial narrowing of the lower scrubbing chamber (6). The lower chamber exhaust gas outlet (8) thus comprises a body (8b) which extends from the central opening (8a) up to the wall of the exhaust gas reaction tube (4). The axial narrowing more in particular is designed or shaped substantially as a bottleneck designed to reduce the pressure drop over the narrowing by avoiding sharp edges that may disturb the exhaust gas flow and increase flow resistance therein.

Accordingly, the lower scrubbing chamber (6) and the upper scrubbing chamber (7) are fluidically connected through a lower chamber exhaust gas outlet (8) guiding the partially scrubbed exhaust gas flowing from the lower scrubbing chamber (6) to the upper scrubbing chamber (7). The lower chamber exhaust gas outlet (8), in particular the exhaust gas outlet body (8b), typically comprises a reverse funnel extending from walls of the exhaust gas reaction tube (4) upwards and towards the central opening (8a). A funnel typically refers to a tubular structure, wide at the top and narrow at the bottom, that is used for guiding liquid into a smaller opening. By referring to a reverse funnel, it is meant that the funnel structure is wide at the bottom and narrower at the top, thereby guiding exhaust gas flowing from the wider exit of the lower scrubbing chamber (6) to the more narrow entrance of the upper scrubbing chamber (7).

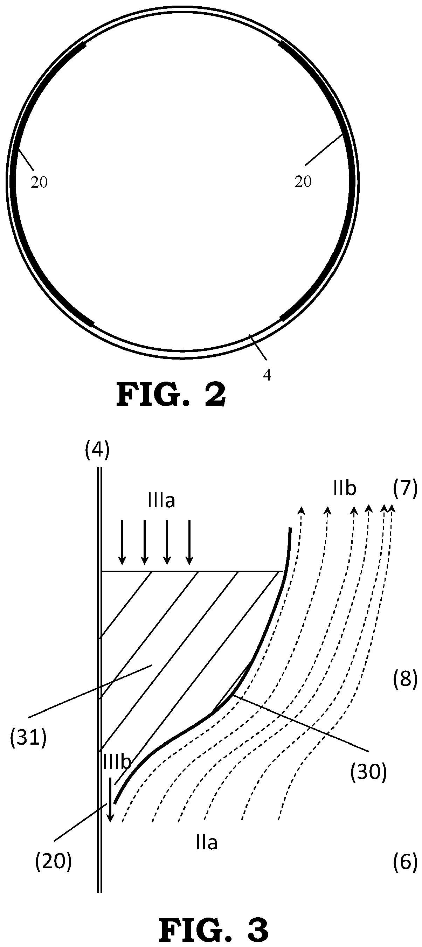

As can be seen in figure 2, between this body (8b) and the inner of the exhaust gas reaction tube (4), one or more slit-shaped openings (20) are provided. These slit-shaped openings (20) consequently interrupt the contact between the wall of the lower chamber exhaust gas outlet (8) and the wall of the exhaust gas reaction tube (4). These slit-shaped openings (20) allow scrubber fluid still having alkalinity in it from the upper scrubbing chamber (7) to flow down along the wall of the exhaust gas reaction tube (4) into the lower scrubbing chamber (6) (see lines III as indicated in figure 1). In this way, the scrubber fluid forms a kind of water film along the wall of the exhaust gas reaction tube (4). This water film also crosses the side inlet (2) of the lower scrubbing chamber (6), as at least one slit-shaped opening is arranged at the side of the reaction tube where the exhaust gas side inlet is arranged, having as a consequence that the exhaust gas produced by the one or more engines of the marine vessel need to pass through the water film flowing over this side inlet (2). The one or more slit-shaped openings (20) cover between 40% and 60%, and more in particular around 50%, of the wall of the lower chamber exhaust gas outlet (8).

In fact, the slit-shaped openings (20) are located along the circumferential border where the reverse funnel is attached to the exhaust gas reaction tube. The one or more slit-shaped openings are there to allow scrubber fluid to flow from the upper scrubbing chamber (7) to the lower scrubbing chamber (6) and are adapted to allow the used scrubber fluid to flow over the side inlet (2).

In the embodiment of a scrubber according to the present disclosure as shown in figure 2, two slit-shaped openings (20) are provided which are arranged opposite each other, i.e. one arranged at the height of the side inlet (2) arranged in the lower scrubbing chamber (6) and one arranged at the opposite side thereof. As can be seen in figure 1, a deflection body (11) is arranged close to the circular opening of the division plate to redirect the incoming exhaust gas towards the outer walls of the exhaust gas reaction tube. The distance between the deflection body (11) and the circular opening (8a) of the lower chamber exhaust gas outlet (8) has to be sufficient to avoid a constriction of the exhaust gas flow that enters the upper scrubbing chamber (7).

This deflection body (11) comprises in its simplest form two right circular cones pointing in opposite direction and having a common circular base. These two right circular cones have a length axis which virtually connects the vertexes of the respective right circular cones and which coincides with the length axis of the exhaust gas reaction tube (4). The angle α typically is between 80° and 100° and needs to be an optimal compromise between reducing the pressure drop caused by the respective cone and the efficient and uniform spreading of the flow of the exhaust gas in the upper scrubbing chamber (7).

As is shown in figure 1, the deflection body (11) is fastened to the inner wall (4) of the exhaust gas reaction tube (4) by means of connectors (13) that are arranged to cause a minimal disturbance of the exhaust gas flow in the upper scrubbing chamber (7).

In a method according to the present disclosure, exhaust gas produced by one or more engines of a marine vessel is scrubbed in a wet inline scrubber (1) as described above. The method comprising the steps of:
- introducing the exhaust gas from the one or more engines of the marine vessel via the side inlet (2) in the lower scrubbing chamber (6);
- injecting alkali scrubber fluid in the exhaust gas present in the lower scrubbing chamber (6) thereby partially scrubbing the exhaust gas;
- withdrawing the partially scrubbed exhaust gas from the lower scrubbing chamber (6) and letting it flow into the upper scrubbing chamber (7) by passing it through a reverse funnel extending from walls of the exhaust gas reaction tube (4) upwards and towards a central opening (8a)
- injecting alkali scrubber fluid in the partially scrubbed exhaust gas present in the upper scrubbing chamber (7) thereby further scrubbing the partially scrubbed exhaust gas;
- withdrawing the scrubbed exhaust gas from the upper scrubbing chamber (7) via the exhaust gas outlet (12) arranged at the top of the upper scrubbing chamber (7);
- flowing of used scrubber fluid from the upper scrubbing chamber (7) through one or more slit-shaped openings (20);
- flowing of used scrubber fluid over the exhaust gas side inlet (2) present in the lower scrubbing chamber (6);
- withdrawing the used scrubber fluid from the lower scrubbing chamber (6) via the used scrubber fluid drain (3) at the bottom of the lower scrubbing chamber (6).

The method may further comprise the step of injecting alkali scrubber fluid in the exhaust gas produced by the one or more engines of the marine vessel which is flowing in the side tube (9).

The method further comprises the step of injecting alkali scrubber fluid in the upper scrubbing chamber (7) above the deflection body (11).

The method may also comprise the step of withdrawing the used scrubber fluid via the single used scrubber fluid drain (3) at the bottom of the lower scrubbing chamber (6).

Figure 3, which is a detail of the wet line scrubber as described herein, shows part of the lower chamber exhaust gas outlet (8) guiding the partially scrubbed exhaust gas flowing from the lower scrubbing chamber (6) to the upper scrubbing chamber (7) along lines II (from Ila to IIb). The lower chamber exhaust gas outlet (8) comprises a reverse funnel (30) extending from walls of the exhaust gas reaction tube (4) upwards and towards a central opening (8a). Lines III show how used scrubber fluid from the upper scrubbing chamber (7) flows (from Illa to IIIb) through the one or more slit-shaped openings (20) into the lower scrubbing chamber (6). The structure of the reverse funnel (30) in the lower chamber exhaust gas outlet (8) also creates a scrubber fluid reservoir (31) allowing controlled dosage of the scrubber fluid through the slit-shaped openings (20).

## Claims

1. A wet inline scrubber (1) using alkali scrubber fluid for reducing the amount of SOx in an exhaust gas produced by one or more engines of a marine vessel, comprising a vertically extending exhaust gas reaction tube (4), which comprises
- a lower scrubbing chamber (6) comprising
∘ a side inlet (2) for the exhaust gas produced by the one or more engines of the marine vessel,
∘ a plurality of scrubber fluid injectors (10) to inject alkali scrubber fluid in the exhaust gas present in the lower scrubbing chamber to partially scrub this exhaust gas, resulting in a first used scrubber liquid,
∘ a drain (3) for used scrubber fluid at the bottom thereof,
- an upper scrubbing chamber (7) comprising
∘ an exhaust gas outlet (12) at the top thereof,
∘ a plurality of scrubber fluid injectors (10) to inject alkali scrubber fluid in the exhaust gas to further scrub exhaust gas which has already partially been scrubbed in the lower scrubbing chamber, resulting in a second used scrubber fluid,
wherein the lower scrubbing chamber (6) and the upper scrubbing chamber (7) are fluidically connected through a lower chamber exhaust gas outlet (8) guiding the partially scrubbed exhaust gas flowing from the lower scrubbing chamber (6) to the upper scrubbing chamber (7), said lower chamber exhaust gas outlet (8) comprising a reverse funnel (30) extending from walls of the exhaust gas reaction tube (4) upwards and towards a central opening (8a), **characterized in that** along the circumferential border where the reverse funnel (30) is attached to the exhaust gas reaction tube (4), one or more slit-shaped openings (20) are provided that allow the second used scrubber fluid to flow from the upper scrubbing chamber (7) to the lower scrubbing chamber (6) and that allow the second used scrubber fluid to flow over the side inlet (2) for the exhaust gas present in the lower scrubbing chamber (6).

2. A scrubber (1) according to claim 1, wherein the one or more slit-shaped openings (20) cover between 40% and 60% of the circumferential border where the reverse funnel (30) is attached to the exhaust gas reaction tube (4).

3. A scrubber (1) according to claim 2, wherein the one or more slit-shaped openings (20) cover 50% of the circumferential border where the reverse funnel (30) is attached to the exhaust gas reaction tube (4).

4. A scrubber (1) according to any one of claims 1 to 3, wherein the lower chamber exhaust gas outlet (8) comprises two slit-shaped openings.

5. A scrubber (1) according to claim 4, wherein the lower chamber exhaust gas outlet (8) comprises a first slit-shaped opening (20) arranged at the side of the exhaust gas reaction tube (4) where the exhaust gas side inlet (2) is arranged and a second slit-shaped opening (20) is arranged at the opposite side thereof.

6. A scrubber (1) according to any one of claims 1 to 5, wherein the scrubber comprises a side tube (9) which is connected to the lower scrubber chamber (6) via the side inlet (2), wherein this side tube (9) is arranged with one or more alkali scrubber fluid injectors (10) to inject scrubber fluid in the exhaust gas coming from the one or more engines of the marine vessel.

7. A scrubber (1) according to any one of claims 1 to 6, wherein the upper scrubbing chamber (7) comprises a deflection body (11) which is arranged above the central opening (8a) of the lower chamber exhaust gas outlet (8).

8. A scrubber (1) according to claim 7, wherein the one or more scrubber fluid injectors (10) of the upper scrubbing chamber (7) are arranged above the deflection body (11).

9. A scrubber (1) according to any one of claims 1 to 8, wherein the lower scrubbing chamber (6) comprises only one drain (3) for used scrubber fluid arranged at the bottom thereof.

10. A scrubber (1) according to any one of the preceding claims, wherein the height of the scrubber (1) is between 8 m and 18 m, depending upon the size of the one or more engines of the marine vessel.

11. A method for scrubbing of exhaust gas produced by one or more engines of a marine vessel, wherein the exhaust gas is introduced into a wet inline scrubber (1) according to any one of claims 1 to 10 where the exhaust gas is scrubbed in contact with alkali scrubber fluid for reduction of SOx in the exhaust gas, the method comprising the steps of:
- introducing the exhaust gas from the one or more engines of the marine vessel via a side inlet (2) in a lower scrubbing chamber (6) of a vertically extending exhaust gas reaction tube (4);
- injecting alkali scrubber fluid in the exhaust gas present in the lower scrubbing chamber (6), thereby partially scrubbing the exhaust gas, and obtaining a first used scrubber liquid;
- withdrawing the partially scrubbed exhaust gas from the lower scrubbing chamber (6) and letting it flow into an upper scrubbing chamber (7) by passing it through a reverse funnel (30) extending from walls of the exhaust gas reaction tube (4) upwards and towards a central opening (8a);
- injecting alkali scrubber fluid in the partially scrubbed exhaust gas present in the upper scrubbing chamber (7), thereby further scrubbing the partially scrubbed exhaust gas, and obtaining a second used scrubber liquid;
- withdrawing the scrubbed exhaust gas from the upper scrubbing chamber (7) via an exhaust gas outlet (12) arranged at the top of the upper scrubbing chamber (7);
- flowing of the second used scrubber fluid from the upper scrubbing chamber (7) through one or more slit-shaped openings (20) arranged along the circumferential border where the reverse funnel (30) is attached to the exhaust gas reaction tube (4b);
- flowing of the second used scrubber fluid over the exhaust gas side inlet (2) present in the lower scrubbing chamber (6);
- withdrawing the used scrubber fluid from the lower scrubbing chamber (6) via a drain (3) for used scrubber fluid at the bottom of the lower scrubbing chamber (6).

12. A method according to claim 11, wherein the method further comprises the step of injecting alkali scrubber fluid in the exhaust gas from the one or more engines of the marine vessel which is flowing in a side tube (9) which is connected to the lower scrubbing chamber (6) via the side inlet (2).

13. A method according to claim 11 and 12, wherein the method comprises the step of injecting alkali scrubber fluid in the upper scrubbing chamber (7) above a deflection body (11).

14. A method according to any one of claims 11 to 13, wherein the method comprises the step of withdrawing the used scrubber fluid via only one drain (3) for used scrubber liquid at the bottom of the lower scrubbing chamber (6).

## Patentansprüche

1. Inline-Nasswäscher (1) mit Verwendung eines Alkaliwaschfluids zur Reduzierung des SOx-Gehalts eines Abgases, das von einem oder mehreren Motoren eines Seeschiff erzeugt wird, der ein sich vertikal erstreckendes Abgasreaktionsrohr (4) umfasst, das Folgendes umfasst:
- eine untere Waschkammer (6), die Folgendes umfasst:
- einen Seiteneinlass (2) für das von dem einen oder den mehreren Motoren des Seeschiff erzeugte Abgas,
- mehrere Waschfluideinspritzvorrichtungen (10) zum Einspritzen von Alkaliwaschfluid in das Abgas, das in der unteren Waschkammer vorhanden ist, um dieses Abgas zum Teil zu waschen, was zu einer ersten gebrauchten Waschflüssigkeit führt,
- einen Ablauf (3) für gebrauchtes Waschfluid an dem Boden davon,
- eine obere Waschkammer (7), die Folgendes umfasst:
- einen Abgasauslass (12) an der Oberseite davon,
- mehrere Waschfluideinspritzvorrichtungen (10) zum Einspritzen eines Alkaliwaschfluids in das Abgas, um das Abgas, das bereits zum Teil in der unteren Waschkammer gewaschen wurde, weiter zu waschen, was zu einem zweiten gebrauchten Waschfluid führt,
wobei die untere Waschkammer (6) und die obere Waschkammer (7) durch einen Abgasauslass (8) der unteren Kammer, der das aus der unteren Waschkammer (6) strömende zum Teil gewaschene Abgas zu der oberen Waschkammer (7) führt, strömungsverbunden sind, wobei der Abgasauslass (8) der unteren Kammer einen umgekehrten Trichter (30) umfasst, der sich von Wänden des Abgasreaktionsrohrs (4) nach oben und zu einer mittigen Öffnung (8a) erstreckt, **dadurch gekennzeichnet, dass** entlang der Umfangsgrenze, wo der umgekehrte Trichter (30) an dem Abgasreaktionsrohr (4) angebracht ist, eine oder mehrere schlitzförmige Öffnungen (20) vorgesehen sind, die gestatten, dass das zweite gebrauchte Waschfluid aus der oberen Waschkammer (7) zu der unteren Waschkammer (6) strömt, und die gestatten, dass das zweite gebrauchte Waschfluid über den Seiteneinlass (2) für das in der unteren Waschkammer (6) vorhandene Abgas strömt.

2. Wäscher (1) nach Anspruch 1, wobei die eine oder die mehreren schlitzförmigen Öffnungen (20) zwischen 40 % und 60 % der Umfangsgrenze, an der der umgekehrte Trichter (30) an dem Abgasreaktionsrohr (4) angebracht ist, zudecken.

3. Wäscher (1) nach Anspruch 2, wobei die eine oder die mehreren schlitzförmigen Öffnungen (20) 50 % der Umfangsgrenze, an der der umgekehrte Trichter (30) an dem Abgasreaktionsrohr (4) angebracht ist, zudecken.

4. Wäscher (1) nach einem der Ansprüche 1 bis 3, wobei der Abgasauslass (8) der unteren Kammer zwei schlitzförmige Öffnungen umfasst.

5. Wäscher (1) nach Anspruch 4, wobei der Abgasauslass (8) der unteren Kammer eine erste schlitzförmige Öffnung (20) umfasst, die an der Seite des Abgasreaktionsrohrs (4), an der der Abgasseiteneinlass (2) angeordnet ist, angeordnet ist, und eine zweite schlitzförmige Öffnung (20) an der gegenüberliegenden Seite davon angeordnet ist.

6. Wäscher (1) nach einem der Ansprüche 1 bis 5, wobei der Wäscher ein Seitenrohr (9) umfasst, das über den Seiteneinlass (2) mit der unteren Waschkammer (6) verbunden ist, wobei dieses Seitenrohr (9) mit einer oder mehreren Alkaliwaschfluideinspritzvorrichtungen (10) zum Einspritzen von Waschfluid in das von dem einen oder den mehreren Motoren des Seeschiff kommende Abgas angeordnet ist.

7. Wäscher (1) nach einem der Ansprüche 1 bis 6, wobei die obere Waschkammer (7) einen Ablenkkörper (11) umfasst, der über der mittigen Öffnung (8a) des Abgasauslasses (8) der unteren Kammer angeordnet ist.

8. Wäscher (1) nach Anspruch 7, wobei die eine oder die mehreren Waschfluideinspritzvorrichtungen (10) der oberen Waschkammer (7) über dem Ablenkkörper (11) angeordnet sind.

9. Wäscher (1) nach einem der Ansprüche 1 bis 8, wobei die untere Waschkammer (6) nur einen Ablauf (3) für gebrauchtes Waschfluid umfasst, der an dem Boden davon angeordnet ist.

10. Wäscher (1) nach einem der vorhergehenden Ansprüche, wobei die Höhe des Wäschers (1) zwischen 8 m und 18 m beträgt, in Abhängigkeit von der Größe des einen oder der mehreren Motoren des Seeschiff.

11. Verfahren zum Waschen von Abgas, das von einem oder mehreren Motoren eines Seeschiff erzeugt wird, wobei das Abgas in einen Inline-Nasswäscher (1) nach einem der Ansprüche 1 bis 10 eingeleitet wird, wo das Abgas im Kontakt mit einem Alkaliwaschfluid zur Reduzierung von SOx in dem Abgas gewaschen wird, wobei das Verfahren die folgenden Schritte umfasst:
- Einleiten des Abgases von dem einen oder den mehreren Motoren des Seeschiff über einen Seiteneinlass (2) in eine untere Waschkammer (6) eines sich vertikal erstreckenden Abgasreaktionsrohrs (4);
- Einspritzen von Alkaliwaschfluid in das in der unteren Waschkammer (6) vorhandene Abgas, wodurch das Abgas zum Teil gewaschen wird und eine erste gebrauchte Waschflüssigkeit erhalten wird;
- Entziehen des zum Teil gewaschenen Abgases aus der unteren Waschkammer (6) und Strömenlassen in eine obere Waschkammer (7), indem es durch einen umgekehrten Trichter (30), der sich von Wänden des Abgasreaktionsrohrs (4) nach oben und zu einer mittigen Öffnung (8a) erstreckt, geleitet wird;
- Einspritzen eines Alkaliwaschfluids in das zum Teil gewaschene Abgas, das in der oberen Waschkammer (7) vorhanden ist, wodurch das zum Teil gewaschene Abgas weiter gewaschen wird und eine zweite gebrauchte Waschflüssigkeit erhalten wird;
- Entziehen des gewaschenen Abgases aus der oberen Waschkammer (7) über einen Abgasauslass (12), der an der Oberseite der oberen Waschkammer (7) angeordnet ist;
- Strömenlassen des zweiten gebrauchten Waschfluids von der oberen Waschkammer (7) durch eine oder mehrere schlitzförmige Öffnungen (20), die entlang der Umfangsgrenze, wo der umgekehrte Trichter (30) an dem Abgasreaktionsrohr (4b) angebracht ist, angeordnet sind;
- Strömenlassen des zweiten gebrauchten Waschfluids über den Abgasseiteneinlass (2), der in der unteren Waschkammer (6) vorhanden ist;
- Entziehen des gebrauchten Waschfluid aus der unteren Waschkammer (6) durch einen Ablauf (3) für gebrauchtes Waschfluid am Boden der unteren Waschkammer (6).

12. Verfahren nach Anspruch 11, wobei das Verfahren ferner den Schritt des Einspritzens von Alkaliwaschfluid in das Abgas von dem einen oder den mehreren Motoren des Seeschiff, das in einem Seitenrohr (9), das mit der unteren Waschkammer (6) über den Seiteneinlass (2) verbunden ist, strömt, umfasst.

13. Verfahren nach Anspruch 11 und 12, wobei das Verfahren den Schritt des Einspritzens von Alkaliwaschfluid in die obere Waschkammer (7) über einem Ablenkkörper (11) umfasst.

14. Verfahren nach einem der Ansprüche 11 bis 13, wobei das Verfahren den Schritt des Entziehens des gebrauchten Waschfluids über nur einen Ablauf (3) für gebrauchte Waschflüssigkeit am Boden der unteren Waschkammer (6) umfasst.

## Revendications

1. Épurateur intégré humide (1) utilisant un fluide d'épurateur alcalin pour réduire la quantité de SOx dans un gaz d'échappement produit par un ou plusieurs moteurs d'un navire marin, comprenant un tube de réaction de gaz d'échappement s'étendant verticalement (4), qui comprend
- une chambre d'épuration inférieure (6) comprenant
∘ une entrée latérale (2) pour le gaz d'échappement produit par l'un ou les plusieurs moteurs du navire marin,
∘ une pluralité d'injecteurs de fluide d'épurateur (10) pour injecter un fluide d'épurateur alcalin dans le gaz d'échappement présent dans la chambre d'épuration inférieure pour partiellement épurer ce gaz d'échappement, ayant pour résultat un premier liquide d'épurateur usé,
∘ un orifice d'évacuation (3), pour un fluide d'épurateur usé, en bas de celle-ci,
- une chambre d'épuration supérieure (7) comprenant
∘ une sortie de gaz d'échappement (12) en haut de celle-ci,
∘ une pluralité d'injecteurs de fluide d'épurateur (10) pour injecter un fluide d'épurateur alcalin dans le gaz d'échappement pour épurer davantage un gaz d'échappement qui a déjà été partiellement épuré dans la chambre d'épuration inférieure, ayant pour résultat un second fluide d'épurateur usé, dans lequel la chambre d'épuration inférieure (6) et la chambre d'épuration
supérieure (7) sont fluidiquement raccordées par le biais d'une sortie de gaz d'échappement de chambre inférieure (8) guidant le gaz d'échappement partiellement épuré s'écoulant de la chambre d'épuration inférieure (6) vers la chambre d'épuration supérieure (7), ladite sortie de gaz d'échappement de chambre inférieure (8) comprenant un entonnoir inversé (30) s'étendant des parois du tube de réaction de gaz d'échappement (4) vers le haut et vers une ouverture centrale (8a), **caractérisé en ce que**, le long de la bordure circonférentielle où l'entonnoir inversé (30) est fixé au tube de réaction de gaz d'échappement (4), une ou plusieurs ouvertures en forme de fente (20) sont prévues qui permettent au second fluide d'épurateur usé de s'écouler de la chambre d'épuration supérieure (7) vers la chambre d'épuration inférieure (6) et qui permettent au second fluide d'épurateur usé de s'écouler par-dessus l'entrée latérale (2) pour le gaz d'échappement présent dans la chambre d'épuration inférieure (6).

2. Épurateur (1) selon la revendication 1, dans lequel l'une ou les plusieurs ouvertures en forme de fente (20) couvrent entre 40 % et 60 % de la bordure circonférentielle où l'entonnoir inversé (30) est fixé au tube de réaction de gaz d'échappement (4).

3. Épurateur (1) selon la revendication 2, dans lequel l'une ou les plusieurs ouvertures en forme de fente (20) couvrent 50 % de la bordure circonférentielle où l'entonnoir inversé (30) est fixé au tube de réaction de gaz d'échappement (4).

4. Épurateur (1) selon l'une quelconque des revendications 1 à 3, dans lequel la sortie de gaz d'échappement de chambre inférieure (8) comprend deux ouvertures en forme de fente.

5. Épurateur (1) selon la revendication 4, dans lequel la sortie de gaz d'échappement de chambre inférieure (8) comprend une première ouverture en forme de fente (20) agencée sur le côté du tube de réaction de gaz d'échappement (4) où l'entrée latérale du gaz d'échappement (2) est agencé et une seconde ouverture en forme de fente (20) est agencée sur le côté opposé de celui-ci.

6. Épurateur (1) selon l'une quelconque des revendications 1 à 5, dans lequel l'épurateur comprend un tube latéral (9) qui est raccordé à la chambre d'épurateur inférieure (6) par l'intermédiaire de l'entrée latérale (2), dans lequel ce tube latéral (9) est agencé avec un ou plusieurs injecteurs de fluide d'épurateur alcalin (10) pour injecter un fluide d'épurateur dans le gaz d'échappement provenant de l'un ou des plusieurs moteurs du navire marin.

7. Épurateur (1) selon l'une quelconque des revendications 1 à 6, dans lequel la chambre d'épuration supérieure (7) comprend un corps de déflexion (11) qui est agencé au-dessus de l'ouverture centrale (8a) de la sortie de gaz d'échappement de chambre inférieure (8).

8. Épurateur (1) selon la revendication 7, dans lequel l'un ou les plusieurs injecteurs de fluide d'épurateur (10) de la chambre d'épuration supérieure (7) sont agencés au-dessus du corps de déflexion (11).

9. Épurateur (1) selon l'une quelconque des revendications 1 à 8, dans lequel la chambre d'épuration inférieure (6) comprend un seul orifice d'évacuation (3), pour un fluide d'épurateur usé, agencé en bas de celle-ci.

10. Épurateur (1) selon l'une quelconque des revendications précédentes, dans lequel la hauteur de l'épurateur (1) est entre 8 m et 18 m, en fonction de la taille de l'un ou des plusieurs moteurs du navire marin.

11. Procédé pour l'épuration de gaz d'échappement produit par un ou plusieurs moteurs d'un navire marin, dans lequel le gaz d'échappement est introduit dans un épurateur intégré humide (1) selon l'une quelconque des revendications 1 à 10 où le gaz d'échappement est épuré en contact avec un fluide d'épurateur alcalin pour la réduction de SOx dans le gaz d'échappement, le procédé comprenant les étapes de :
- l'introduction du gaz d'échappement à partir de l'un ou des plusieurs moteurs du navire marin par l'intermédiaire d'une entrée latérale (2) dans une chambre d'épuration inférieure (6) d'un tube de réaction de gaz d'échappement s'étendant verticalement (4) ;
- l'injection d'un fluide d'épurateur alcalin dans le gaz d'échappement présent dans la chambre d'épuration inférieure (6), ainsi épurant partiellement le gaz d'échappement, et l'obtention d'un premier liquide d'épurateur usé ;
- le retrait du gaz d'échappement partiellement épuré à partir de la chambre d'épuration inférieure (6) et le laisser s'écouler dans une chambre d'épuration supérieure (7) en le faisant passer à travers un entonnoir inversé (30) s'étendant des parois du tube de réaction de gaz d'échappement (4) vers le haut et vers une ouverture centrale (8a) ;
- l'injection d'un fluide d'épurateur alcalin dans le gaz d'échappement partiellement épuré présent dans la chambre d'épuration supérieure (7), ainsi épurant davantage le gaz d'échappement partiellement épuré, et l'obtention d'un second liquide d'épurateur usé ;
- le retrait du gaz d'échappement épuré à partir de la chambre d'épuration supérieure (7) par l'intermédiaire d'une sortie de gaz d'échappement (12) agencée en haut de la chambre d'épuration supérieure (7) ;
- l'écoulement du second fluide d'épurateur usé à partir de la chambre d'épuration supérieure (7) à travers une ou plusieurs ouvertures en forme de fente (20) agencées le long de la bordure circonférentielle où l'entonnoir inversé (30) est fixé au tube de réaction de gaz d'échappement (4b) ;
- l'écoulement du second fluide d'épurateur usé par-dessus l'entrée latérale du gaz d'échappement (2) présent dans la chambre d'épuration inférieure (6) ;
- le retrait du fluide d'épurateur usé à partir de la chambre d'épuration inférieure (6) par l'intermédiaire d'un orifice d'évacuation (3), pour un fluide d'épurateur usé, en bas de la chambre d'épuration inférieure (6).

12. Procédé selon la revendication 11, dans lequel le procédé comprend en outre l'étape de l'injection d'un fluide d'épurateur alcalin dans le gaz d'échappement provenant de l'un ou des plusieurs moteurs du navire marin, qui s'écoule dans un tube latéral (9) qui est raccordé à la chambre d'épuration inférieure (6) par l'intermédiaire de l'entrée latérale (2).

13. Procédé selon la revendication 11 et 12, dans lequel le procédé comprend l'étape de l'injection d'un fluide d'épurateur alcalin dans la chambre d'épuration supérieure (7) au-dessus d'un corps de déflexion (11).

14. Procédé selon l'une quelconque des revendications 11 à 13, dans lequel le procédé comprend l'étape du retrait du fluide d'épurateur usé par l'intermédiaire d'un seul orifice d'évacuation (3), pour un liquide d'épurateur usé, en bas de la chambre d'épuration inférieure (6).
